# FASCICULE DE BREVET EUROPEEN

(11) **EP 3 174 748 B1**
(45) Date de publication et mention de la délivrance du brevet: **04.07.2018**
(21) Numéro de dépôt: 15753398.5
(22) Date de dépôt: 23.07.2015
(51) Int. Cl.: B60K 11/08

(54) **GUIDE D'AIR POUR FACE AVANT DE VEHICULE AUTOMOBILE COMPORTANT DES ZONES DE FAIBLESSE MECANIQUE**
KRAFTFAHRZEUGFRONTFLÄCHENLUFTFÜHRUNG MIT BEREICHEN MIT MECHANISCHER SCHWÄCHE
MOTOR VEHICLE FRONT SURFACE AIR GUIDE COMPRISING MECHANICAL WEAKNESS AREAS

(30) Priorité: 01.08.2014 FR 1457540
(43) Date de publication de la demande: 07.06.2017
(73) Titulaire: Compagnie Plastic Omnium, 69007 Lyon (FR)
(72) Inventeur: ROUSSEL, Thierry, F-52500 Montesson (FR); FAYT, Arnold, F-01640 Jujurieux (FR)
(74) Mandataire: Andrieux, Benoît
(86) Numéro de dépôt international: PCT/FR2015/052020
(87) Numéro de publication internationale: WO 2016/016549

(56) Documents cités:
- EP-A2- 1 243 455
- DE-A1-102008 039 806
- DE-A1-102009 027 475
- FR-A1- 2 911 559
- JP-U- S53 127 035

## Description

La présente invention concerne le domaine automobile, et plus particulièrement le domaine des faces avant pour véhicule automobile, en particulier du type comportant des entrées d'air permettant de refroidir le moteur du véhicule.

On appelle face avant pour véhicule automobile, un ensemble de composants situés en avant des refroidisseurs d'air, comportant au moins le parechoc.

Une face avant peut en outre comporter : des éléments de choc (absorbeurs), une poutre, des éléments de carénage, des éléments de conduite d'air, des ailes avant, des optiques...

Généralement, une face avant de véhicules comporte des entrées d'air de refroidissement qui sont prévues à l'avant des véhicules automobiles pour en refroidir le moteur. L'entrée d'air de refroidissement est souvent ornementée d'une grille.

En général, le refroidissement s'opère par l'intermédiaire d'un échangeur air/liquide de refroidissement, également désigné radiateur, et/ou d'un refroidisseur d'air de suralimentation, appelé aussi en abrégé RAS,

Ces deux dispositifs doivent être alimentés par un flux d'air provenant de l'extérieur du véhicule pour assurer leur fonction de refroidissement.

Le radiateur est généralement alimenté au moyen d'une entrée d'air de refroidissement centrale, alors que le RAS est généralement alimenté au moyen d'une entrée d'air de refroidissement latérale, en face avant du parechoc.

Ces entrées d'air permettent à l'air extérieur au véhicule de pénétrer dans une gaine d'air conduisant l'air vers les systèmes de refroidissement.

Lors d'un choc à l'avant du véhicule, la force exercée sur la face avant est transmise au système de refroidissement par la gaine d'air, du fait de sa rigidité, conduisant à un endommagement sévère de ce système.

Pour remédier à ce problème, on connaît des faces avant ne comportant pas de guide d'air. Cependant, l'absence de guide d'air n'offre pas une alimentation en air frais optimale, réduisant le rendement du système de refroidissement.

Pour remédier à ce problème, on connaît également un guide d'air composé de deux matières organiques différentes. Ces guides d'air bi-matières sont généralement constitués d'au moins deux parties en polypropylène (PP), l'une des parties utilisant un polypropylène plus souple. Cependant, ces guides d'air bi-matières ne permettent pas de limiter suffisamment la transmission d'effort par le guide d'air, et sont donc peu efficace pour préserver le système de refroidissement en cas de chocs véhicule.

Enfin, on connaît également un guide d'air intégrant une forte proportion de matériaux souples, par exemple du type élastomère. La souplesse des matériaux permet d'absorber une partie du choc, limitant d'autant les pressions exercées sur le système de refroidissement. Cependant, les guides d'air en matériaux souples sont difficiles à interfacer entre le système de refroidissement (volets pilotés ...) et le pare-chocs à cause de leur tenue (déformation due à la souplesse). Par ailleurs, ces guides d'air en matériaux souples sont d'un coût relativement élevé. DE 10 2009 027 475, qui sert de base à la présentation en deux parties de la revendication 1, décrit un tel guide d'air. DE 10 2008 039 806 décrit un guide d'air comportant des zones de faiblesse mécanique. L'invention a pour but de remédier à ces inconvénients en fournissant un guide d'air pour face avant de véhicule automobile, permettant de limiter la transmission au système de refroidissement de la force exercée sur la face avant lors d'un choc à l'avant du véhicule. Pour y parvenir, le guide d'air selon l'invention comporte des zones de faiblesse mécanique aptes à le faire raccourcir selon l'axe X du véhicule (axe longitudinal du véhicule) lors d'un choc frontal.

Ainsi, l'objet de l'invention concerne un guide d'air pour face avant de véhicule automobile selon la revendication 1. Ces zones de faiblesse mécanique permettent ainsi de ne pas endommager le système de refroidissement en cas de choc véhicule. En effet, lors d'un choc longitudinal du véhicule générant un recul du pare-chocs de la face avant, celui-ci exerce une poussée sur le(s) guide(s) d'air interfacé(s) entre le pare-chocs et le système de refroidissement, et les zones de faiblesse mécanique étant calibrées pour rompre sous un certain niveau d'effort, elles se déforment puis rompent afin de limiter les efforts transmis au système de refroidissement.

Le guide d'air selon l'invention permet également de limiter l'emploi de matériau souple uniquement au niveau de l'interface pare-chocs, pour assurer une zone d'étanchéité, permettant ainsi une réduction du coût de la pièce.

Les zones de faiblesse mécanique peuvent comporter des changements d'épaisseur ou de matériau. Par exemple, des parois formant le canal peuvent avoir une épaisseur générale donnée, et les zones de faiblesse mécanique peuvent alors comporter des zones amincies par rapport à l'épaisseur générale, lesdites zones amincies formant des lignes de déformation permanente.

De préférence, les zones de faiblesse mécanique forment une ligne continue dans une section sensiblement frontale du canal, de façon à optimiser le raccourcissement du canal.

Pour optimiser le raccourcissement du canal, on peut également définir le nombre N de lignes de déformation dans chaque paroi du canal, sensiblement parallèles au plan frontal (PF), en fonction de la longueur du guide d'air.

Selon un mode de réalisation, le canal est constitué d'un ensemble de parois formant un quadrilatère en section frontale.

Selon l'invention, chaque paroi formant le canal est formée d'au moins deux plans en escaliers, les surfaces formant intersection entre deux plans en escalier formant ladite zone de faiblesse mécanique.

Selon ce mode de réalisation, les intersections entre deux plans peuvent être formées d'un film d'épaisseur minimale pour assurer une étanchéité. L'épaisseur minimale étant classiquement inférieure à 0,2mm, et l'épaisseur générale des parois pouvant être d'environ 2mm.

De façon préférentielle, l'épaisseur minimale est localisée dans une zone du guide d'air susceptible de recevoir le plus d'effort en cas de choc, tel que les coins du guide d'air.

Enfin, selon l'invention, le guide d'air comporte avantageusement une jupe en matériau souple adaptée à faire étanchéité entre le guide d'air et un pare choc lorsque le guide d'air est monté sur le véhicule.

L'invention concerne également une face avant de véhicule automobile comportant au moins un guide d'air selon l'invention.

L'invention concerne également un véhicule automobile comportant une face avant selon l'invention.

L'invention sera mieux comprise à la lecture des figures annexées, qui sont fournies à titre d'exemples et ne présentent aucun caractère limitatif, dans lesquelles :
La figure 1 illustre un exemple de guide d'air selon l'invention, monté sur une face avant de véhicule.
Les figures 2a à 2d illustrent différentes solutions pour réaliser les zones de faiblesse mécanique.
La figure 3 montre une coupe selon un plan Y du véhicule (coupe transversale) d'un exemple de guide d'air selon l'invention.
La figure 4a illustre en détail deux plans en escaliers reliés par une surface formant une zone de faiblesse mécanique.
La figure 4b illustre en détail la déformation induite par un choc au niveau du détail de la figure 4a.
La figure 5 illustre un canal comportant, de l'avant vers l'arrière du véhicule, une section croissante contrairement au canal de la figure 3.

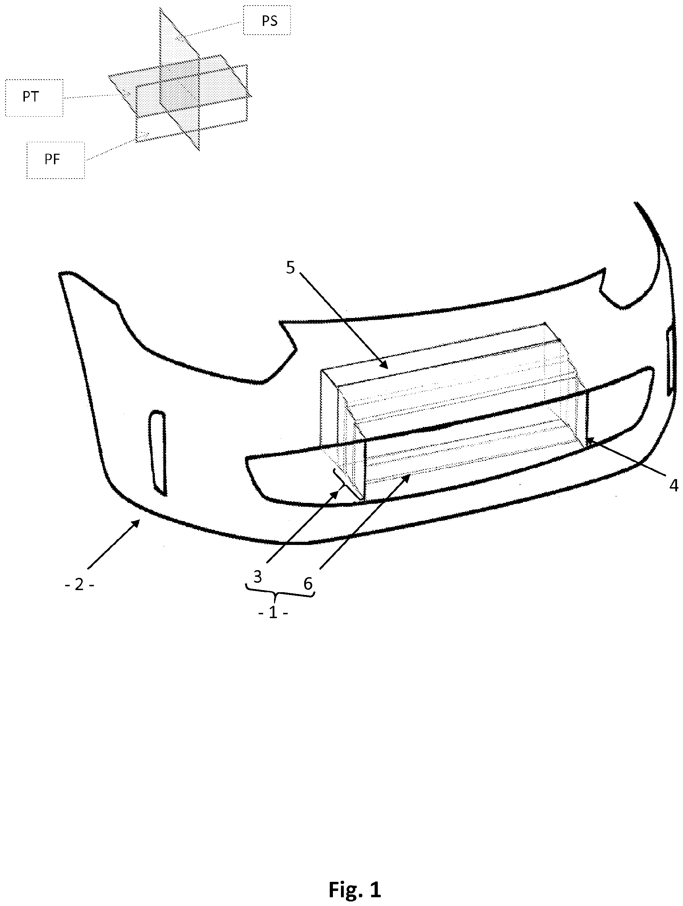

Selon un exemple de réalisation, illustré sur la figure 1, le guide d'air (1) pour face avant (2) de véhicule automobile comporte un canal (3) destiné à canaliser de façon étanche l'air entrant par l'avant du véhicule (4) vers un système de refroidissement (5), lorsque le guide d'air (1) est monté sur le véhicule.

Le canal (3) comporte un plan sagittal (PS), ou « plan en Y », parallèle au plan médian du véhicule séparant la moitié gauche de la moitié droite du véhicule, et un plan transversal (PT), ou « plan en Z » (plan horizontal), parallèle à un plan séparant une partie supérieure et une partie inférieure du véhicule, et un plan frontal (PF), ou « plan en X », parallèle à un plan séparant une partie avant et une partie arrière du véhicule. Le plan transversal (PT) est perpendiculaire au plan sagittal (PS). Le plan frontal (PF) est perpendiculaire aux plans transversal (PT) et sagittal (PS).

Selon l'invention, le canal (3) comporte des zones (6) de faiblesse mécanique, définissant des zones de déformation permanente aptes à faire raccourcir selon l'axe longitudinal (axe X) du véhicule le guide d'air (1) lors d'une déformation de ces zones de faiblesse mécanique, en cas de choc (CH) du guide d'air notamment. On appelle axe longitudinal du canal (3), un axe compris dans le plan sagittal (PS) du canal (3). Ainsi, en cas de recul du pare-chocs :
- lors de petits chocs à basse vitesse, typiquement des chocs se produisant à des vitesses inférieures à 10km/h, tels qu'un choc parking, le pare-chocs, le guide d'air et le système de refroidissement encaissent les efforts reçus sans subir d'endommagement.
- lors de chocs de type assurance, à vitesse plus élevée, typiquement supérieure à 10 km/h et notamment 15km/h, la fusibilité du guide d'air est exploitée : les zones de faiblesse mécanique (6) du guide d'air sont d'abord comprimées, puis le guide d'air (1) se casse dans ces zones de faiblesse mécanique (6), sans endommager le système de refroidissement (5).

Le canal (3) peut être constitué d'une ou plusieurs parois planes ou non, formant ensemble un conduit « relativement étanche » à l'air sur ses côtés (latéraux/haut/bas), et ouvert à ses 2 extrémités (avant/arrière). Le canal peut être constitué de plusieurs canaux plus petits accolés (ou non), par exemple optionnels lors de l'assemblage sur véhicule, par exemple pour un véhicule comportant en option un RAS. Il peut également s'agir, comme illustré sur la figure 1, d'un ensemble de parois (quatre parois sur la figure 1) formant un quadrilatère en section frontale (section dans le plan frontal (PF)).

Il existe différentes solutions pour réaliser les zones de faiblesse mécanique (6).

Par exemple, il est possible de réaliser des changements de matière, c'est-à-dire d'utiliser des matières de moindre résistance mécanique.

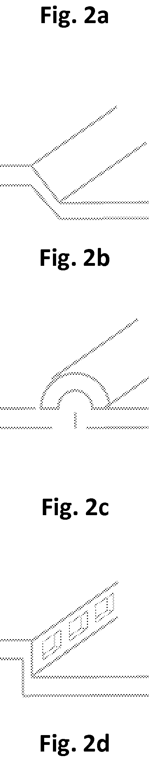

Il est également possible, de réaliser des changements d'épaisseur, c'est-à-dire des amincissements locaux dans la ou les parois formant le canal (3). Ainsi, les parois formant le canal (3) ont une épaisseur générale donnée, et les zones de faiblesse mécanique (6) comportent des zones amincies par rapport à l'épaisseur générale, lesdites zones amincies formant des lignes de déformation permanente (par pliage ou rupture). Ces zones amincies peuvent être des fenêtres ouvertes (figure 2d) si la perte d'étanchéité n'est pas significative par rapport au débit d'air global.

Il est aussi possible d'intégrer des formes spécifiques favorisant la déformation en des endroits choisis, quand le guide d'air est soumis aux contraintes de choc : variation de niveau (figure 2a), pentes (figure 2b), jonction en « bulldozer » (figure 2c)...

Ces différentes solutions sont illustrées sur les figures 2a à 2d. Il est également possible de combiner ces solutions.

Avantageusement, pour que ces zones de faiblesse mécanique (6) définissent des zones de déformation permanente aptes à raccourcir longitudinalement le guide d'air (1), ces zones (6) forment une ligne continue en section sensiblement frontale du guide d'air (1).

Le nombre N de lignes de déformation dans chaque paroi, sensiblement parallèles au plan frontal (PF), est défini en fonction de la longueur du guide d'air (1). En effet, il faut suffisamment de lignes de déformation, pour que, lors d'un impact, le guide d'air se raccourcisse suffisamment pour protéger le système de refroidissement. Il s'agît d'une étape de dimensionnement accessible à l'homme du métier.

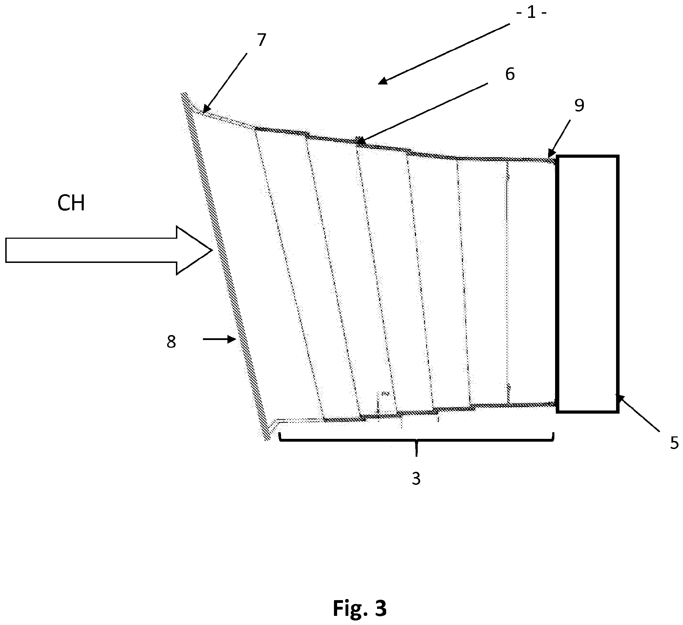

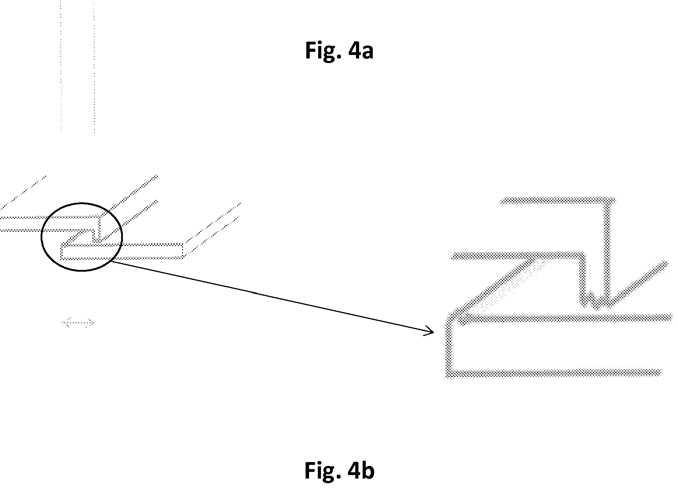

Selon un mode de réalisation, chaque paroi du canal (3) possède, selon sensiblement l'axe longitudinal du véhicule, une section en forme d'escalier. La figure 3 montre une coupe selon un plan Y du véhicule (coupe transversale). Ainsi, chaque paroi est constituée d'au moins deux plans en escaliers. La figure 4a illustre en détail deux plans en escaliers reliés par une surface formant une zone de faiblesse mécanique. La figure 4b illustre en détail la déformation induite par un choc au niveau du détail de la figure 4a.

Lors d'un choc, les niveaux de l'escalier doivent pouvoir s'escamoter partiellement les uns sous les autres. Ces déplacements relatifs sont possibles (facilités) si chaque niveau (marche de l'escalier) garde sensiblement sa forme plane pour pouvoir coulisser en étant guidé sous la suivante : l'épaisseur de matière des niveaux est donc choisie, en fonction dudit matériau, pour conserver la rigidité de chaque niveau pendant le choc mais aussi pour rompre entre deux niveaux (zone de fragilité) pendant ce même choc. Le raccourcissement par effet d'escamotage nécessite au moins deux niveaux, cependant il est préférable d'en prévoir plus : par exemple, pour une profondeur (en X) de guide d'air de 300mm, et pour pouvoir absorber une déformation axiale de 150mm :
- avec seulement deux niveaux (et une zone de fragilité), il faudrait donc que l'escamotage soit de 100% (sur 150mm) entre ces deux niveaux
- avec quatre niveaux (et trois zones de fragilité), il suffit de garantir un « bon » escamotage sur 66% (sur 50mm) entre deux niveaux successifs

De plus, en condition de choc réel sur route, le choc peut ne pas être rigoureusement frontal (c'est-à-dire pas en Y0, mais avec un décalage latéral par rapport à la position Y0, ou selon un angle non nul par rapport à l'axe X...), les conditions de guidage des niveaux lors de l'escamotage ne sont alors pas les mêmes en toute zone du guide d'air.

Il est ainsi plus facile de garantir l'obtention du raccourcissement par quatre ou cinq niveaux que par seulement deux.

Selon l'exemple de la figure 1, le canal (3) est formé par quatre parois : deux parois parallèles au plan transversal (PT) possédant une section sagittale en forme d'escalier, et deux parois parallèles au plan sagittal (PS) possédant une section transversale en forme d'escalier.

Ainsi, chaque paroi est constituée d'au moins deux plans en escaliers. En effet, les escaliers doivent se retrouver sur de préférence tous les côtés du guide d'air pour éviter un blocage du raccourcissement. Les deux plans en escalier sont deux plans sensiblement parallèles liés par une surface sensiblement perpendiculaire aux plans. Les surfaces formant intersection entre deux plans en escalier forment les zones de faiblesse mécanique (6).

Selon un mode de réalisation, les intersections entre deux plans sont formées d'un film d'épaisseur minimale. L'épaisseur minimale est la plus petite épaisseur que l'on puisse obtenir par un procédé de moulage par injection, tout en garantissant une étanchéité à l'air au niveau des intersections.

Selon un exemple de réalisation, l'épaisseur minimale est inférieure à 0,2mm, et l'épaisseur générale des parois, en dehors des zones de faiblesse mécanique (6) est d'environ 2mm.

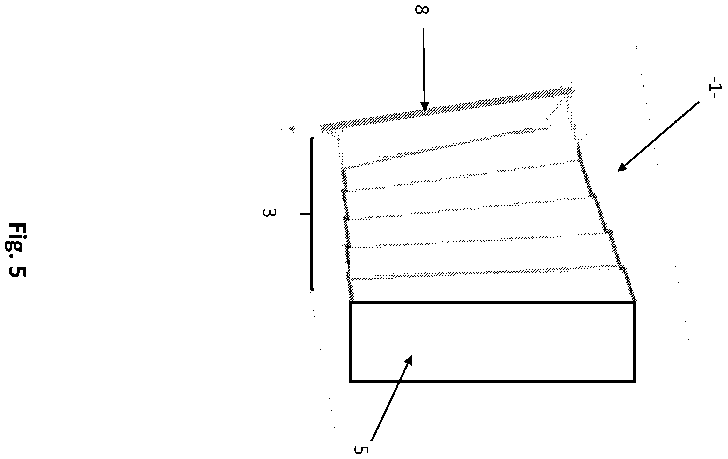

Selon des variantes de réalisation, le canal (3) peut comporter, de l'avant vers l'arrière du véhicule, une section croissante (figure 5) ou décroissante (figure 3). Selon l'une ou l'autre de ces variantes, les escaliers constituant les zones de faiblesse mécanique (6) sont, dans une direction donnée, montant ou descendant.

Selon des variantes de réalisation, le guide d'air (1) peut être obtenu monobloc de moulage ou il peut être constitué de plusieurs parties moulées séparément puis assemblées ensuite (selon par exemple les conditions d'accessibilité et montage sur véhicule) : les jonctions entre chaque partie peuvent avantageusement comporter des formes favorisant l'étanchéité, par exemple par des gorges et nervures se recouvrant en bord pièce.

Selon un mode de réalisation préféré, ces zones de faiblesse mécanique (6) sont localisées dans les parties du guide d'air (1) présentant une rigidité mécanique plus élevée. En effet, ces parties de rigidité mécanique élevée sont moins aptes à se déformer en cas de choc. Elles risquent donc de transmettre des efforts excessifs au système de refroidissement. Ces parties plus rigides sont notamment la jonction entre les parois latérales verticales et les parois horizontales générant une rigidité par « effet de coin » ou « effet de boîte », car chaque paroi se comporte comme une nervure de renfort pour l'autre paroi.

Ainsi, les zones de faiblesses mécaniques (6) sont présentes :
- en priorité, dans les parties les plus rigides par effet de « coin ou de boîte » ;
- puis dans les parties jouxtant ces parties rigides ;
- enfin, optionnellement mais préférablement, entre ces parties rigides.

Le nombre de plans en escalier sur une paroi est défini en fonction de la longueur du guide d'air (1). En effet, il faut suffisamment de lignes de déformation, pour que, lors d'un impact, le guide d'air se raccourcisse suffisamment pour protéger le système de refroidissement.

Le guide d'air (1) comporte avantageusement une jupe ou gaine (7) en matériau souple, adaptée à faire étanchéité entre le guide d'air et un pare choc (8) lorsque le guide d'air est monté sur le véhicule.

Le guide d'air (1) comporte avantageusement un moyen d'appui et de fixation (9) du guide d'air (1) sur le système de refroidissement (5).

L'invention concerne également une face avant de véhicule automobile comportant au moins un guide d'air (centrale ou RAS) selon l'invention.

L'invention concerne également un véhicule automobile comportant une face avant selon l'invention.

## Revendications

1. Guide d'air (1) pour face avant (2) de véhicule automobile comporte un canal (3) destiné à canaliser de façon étanche l'air entrant par l'avant du véhicule (4) vers un système de refroidissement (5), lorsque le guide d'air (1) est monté sur le véhicule, **caractérisé en ce que** le canal (3) comporte des zones de faiblesse mécanique (6), définissant des zones programmées de déformation permanente aptes à raccourcir selon l'axe longitudinal du véhicule le guide d'air (1) lors d'une déformation desdites zones de faiblesse mécanique (6), et **en ce que** chaque paroi formant le canal (3) est formée d'au moins deux plans en escaliers, les surfaces formant intersection entre deux plans en escalier formant ladite zone de faiblesse mécanique.

2. Guide d'air (1) selon la revendication 1, dans lequel les zones de faiblesse mécanique (6) comportent des changements d'épaisseur ou de matériau.

3. Guide d'air (1) selon la revendication 2, dans lequel des parois formant le canal (3) ont une épaisseur générale donnée, et les zones de faiblesse mécanique (6) comportent des zones amincies par rapport à l'épaisseur générale, lesdites zones amincies formant des lignes de déformation permanente.

4. Guide d'air (1) selon l'une des revendications précédentes, dans lequel les zones de faiblesse mécanique (6) forment une ligne continue dans une section sensiblement frontale du canal (3).

5. Guide d'air (1) selon l'une des revendications précédentes, dans lequel le nombre N de lignes de déformation dans chaque paroi du canal (3), sensiblement parallèles au plan frontal (PF), est défini en fonction de la longueur du guide d'air (1).

6. Guide d'air (1) selon l'une des revendications précédentes, dans lequel le canal (3) est constitué d'un ensemble de parois formant un quadrilatère en section frontale.

7. Guide d'air (1) selon la revendication 6, dans lequel les intersections entre deux plans sont formées d'un film d'épaisseur minimale pour assurer une étanchéité.

8. Guide d'air (1) selon la revendication 7, dans lequel l'épaisseur minimale est inférieure à 0,2mm, et l'épaisseur générale des parois est d'environ 2mm.

9. Guide d'air (1) selon la revendication 8, dans lequel l'épaisseur minimale est localisée dans une zone du guide d'air (1) susceptible de recevoir le plus d'effort en cas de choc, tel que les coins du guide d'air (1).

10. Guide d'air (1) selon l'une des revendications précédentes, comportant une jupe en matériau souple adaptée à faire étanchéité entre le guide d'air et un pare choc lorsque le guide d'air est monté sur le véhicule.

11. Face avant (2) de véhicule automobile comportant au moins un guide d'air (1) selon l'une des revendications précédentes.

12. Véhicule automobile comportant une face avant (2) selon la revendication 11.

## Patentansprüche

1. Luftführung (1) für Frontfläche (2) eines Kraftfahrzeugs mit einem Kanal (3), um die über das Frontende des Fahrzeugs (4) eintretende Luft auf abdichtende Weise zu einem Kühlsystem (5) hin zu leiten, wenn die Luftführung (1) an dem Fahrzeug montiert ist, **dadurch gekennzeichnet**, der Kanal (3) Zonen von mechanischer Schwäche (6) aufweist, die programmierte Dauerverformungszonen definieren, die in der Lage sind, bei einer Verformung der Zonen von mechanischer Schwäche (6) die Luftführung (1) in der Längsachse des Fahrzeugs zu verkürzen, und dass jede den Kanal (3) bildende Wand von mindestens zwei treppenförmigen Ebenen gebildet ist, wobei die Oberflächen, die den Schnittpunkt zwischen zwei treppenförmigen Ebenen bilden, die Zone von mechanischer Schwäche bilden.

2. Luftführung (1) nach Anspruch 1, wobei die Zonen von mechanischer Schwäche (6) Änderungen in Dicke oder Material aufweisen.

3. Luftführung (1) nach Anspruch 2, wobei die den Kanal (3) bildenden Wände eine gegebene allgemeine Dicke haben und die Zonen von mechanischer Schwäche (6) sich gegenüber der allgemeinen Dicke verjüngende Zonen aufweisen, wobei die sich verjüngenden Zonen Dauerverformungslinien bilden.

4. Luftführung (1) nach einem der vorhergehenden Ansprüche, wobei die Zonen von mechanischer Schwäche (6) in einem im Wesentlichen frontalen Abschnitt des Kanals (3) eine durchgängige Linie bilden.

5. Luftführung (1) nach einem der vorhergehenden Ansprüche, wobei die Anzahl N an Verformungslinien in jeder Wand des Kanals (3), die zu der frontalen Ebene (PF) im Wesentlichen parallel sind, in Abhängigkeit von der Länge der Luftführung (1) definiert ist.

6. Luftführung (1) nach einem der vorhergehenden Ansprüche, wobei der Kanal (3) aus einer Anordnung von Wänden besteht, die im Frontabschnitt ein Viereck bilden.

7. Luftführung (1) nach Anspruch 6, wobei die Schnittpunkte zwischen zwei Ebenen von einer Folie minimaler Dicke gebildet sind, um eine Abdichtung sicherzustellen.

8. Luftführung (1) nach Anspruch 7, wobei die minimale Dicke weniger als 0,2 mm beträgt und die allgemeine Dicke der Wände etwa 2 mm beträgt.

9. Luftführung (1) nach Anspruch 8, wobei sich die minimale Dicke in einer Zone der Luftführung (1) befindet, die bei einem Aufprall am meisten Kraft aufnehmen kann, wie die Ecken der Luftführung (1).

10. Luftführung (1) nach einem der vorhergehenden Ansprüche, die eine Schürze aus flexiblem Material aufweist, die eingerichtet ist, um die Abdichtung zwischen der Luftführung und einem Stoßfänger zu bewirken, wenn die Luftführung an dem Fahrzeug montiert ist.

11. Frontfläche (2) eines Kraftfahrzeugs, die mindestens eine Luftführung (1) nach einem der vorhergehenden Ansprüche aufweist.

12. Kraftfahrzeug, das eine Frontfläche (2) nach Anspruch 11 aufweist.

## Claims

1. Air guide (1) for the front surface (2) of a motor vehicle comprising a channel (3) for sealably channelling the air entering through the front of the vehicle (4) to a cooling system (5) when the air guide (1) is mounted onto the vehicle, **characterised in that** the channel (3) comprises mechanical weakness areas (6) defining programmed permanent shape-changing areas capable, along the longitudinal axis of the vehicle, of shortening the air guide (1) when said mechanical weakness areas (6) change shape, and **in that** each wall forming the channel (3) consists of at least two stepped planes, the surfaces forming intersection between two stepped planes forming said mechanical weakness area.

2. Air guide (1) according to claim 1, wherein the mechanical weakness areas (6) comprise changes of thickness or of material.

3. Air guide (1) according to claim 2, wherein walls forming the channel (3) have a given general thickness, and the mechanical weakness areas (6) have areas thinner than the general thickness, said thinner areas forming permanent shape-changing lines.

4. Air guide (1) according to one of the preceding claims, wherein the mechanical weakness areas (6) form a continuous line in a substantially front section of the channel (3).

5. Air guide (1) according to one of the preceding claims, wherein the number N of shape-changing lines in each wall of the channel (3), substantially parallel to the front plane (PF), is defined according to the length of the air guide (1).

6. Air guide (1) according to one of the preceding claims, wherein the channel (3) consists of a set of walls forming a quadrilateral in the front section.

7. Air guide (1) according to claim 6, wherein the intersections between two planes are formed by a film of minimum thickness to provide a seal.

8. Air guide (1) according to claim 7, wherein the minimum thickness is less than 0.2 mm, and the general thickness of the walls is about 2 mm.

9. Air guide (1) according to claim 8, wherein the minimum thickness is located in an area of the air guide (1) likely to receive the most force in case of impact, such as the corners of the air guide (1).

10. Air guide (1) according to one of the preceding claims, comprising a skirt made of flexible material adapted to form a seal between the air guide and the bumper when the air guide is mounted onto the vehicle.

11. Front surface (2) of a motor vehicle comprising at least one air guide (1) according to one of the preceding claims.

12. Motor vehicle comprising a front surface (2) according to claim 11.
